# EUROPEAN PATENT SPECIFICATION

(11) **EP 4 155 109 B1**
(45) Date of publication and mention of the grant of the patent: **21.08.2024**
(21) Application number: 21199042.9
(22) Date of filing: 27.09.2021
(51) Int. Cl.: B60K 35/00, B60K 35/22, B60K 35/28, B60K 35/60

(54) **INDOOR DISPLAY APPARATUS OF VEHICLE AND CONTROL METHOD THEREOF**
INNENRAUMANZEIGEVORRICHTUNG EINES FAHRZEUGS UND STEUERUNGSVERFAHREN DAFÜR
APPAREIL D'AFFICHAGE INTÉRIEUR DE VÉHICULE ET SON PROCÉDÉ DE COMMANDE

(43) Date of publication of application: 29.03.2023
(73) Proprietor: Hyundai Mobis Co., Ltd., Gangnam-gu Seoul 06141 (KR)
(72) Inventor: KIM, Do Hyung, 16891 Gyeonggi-do (KR); JIN, Tae Kyoung, 16891 Gyeonggi-do (KR); KIM, Moo Kwan, 16891 Gyeonggi-do (KR)
(74) Representative: dompatent von Kreisler Selting Werner - Partnerschaft von Patent- und Rechtsanwälten mbB

(56) References cited:
- EP-B1- 2 655 119
- US-A- 4 914 427
- US-B1- 6 220 723
- US-B2- 10 144 289
- US-B2- 8 677 662

## Description

### BACKGROUND

### FIELD

Exemplary embodiments of the present invention relate to an indoor display apparatus of a vehicle and a control method thereof, and more particularly, to an indoor display apparatus of a vehicle, which includes a flip-dot display installed at the top of a cockpit module inside a vehicle and configured to output external environment information during autonomous driving such that the external environment information can be intuitionally transferred to a driver, and a control method thereof.

### DISCUSSION OF THE BACKGROUND

In general, an image display apparatus refers to an apparatus that outputs information as an image using a screen. The image display apparatus may include a general monitor as one of computer output apparatuses. Output data are mostly expressed as characters, symbols, figures, images, voice and the like. All data except the voice, among the above-described data, are recognized with the eyes. The image display apparatus temporarily displays such information through the screen.

Examples of such an image display apparatus include a CRT (Cathode Ray Tube), LCD (Liquid Crystal Display), TFT-LCD (Thin Film Transistor-LCD), PDP (Plasma Display), flexible display, HMD (Head Mounted Display) and the like.

Recently, a flip-dot display has been developed, which rotates a flip disk having surfaces with different colors by changing the polarity of an electromagnet, thereby implementing a pixel.

The related art of the present disclosure is disclosed in Korean Patent No. 10-1487904 published on February 4, 2015 and entitled "Flip Dot Display Element using Electromagnet and Assembly Module Thereof". Further relevant prior art is disclosed in US 10 144 289 B2, EP 2 655 119 B1, US 6 220 723 B1, US 4 914 427 A, and US 8 677 662 B2.

An autopilot system is embedded in various driving units for a driver, and performs autonomous driving through driving location search. The auto-cruise system is mainly applied to a ship, airplane and the like. Recently, the autopilot system is also applied to a vehicle that travels on the road, and informs a user of various pieces of information such as a traveling route and road congestion through a monitor, or autonomously drives the vehicle or controls the traveling state of the vehicle.

As such, an autonomous vehicle having the autopilot system mounted therein provides external environment information to a driver during autonomous driving, such that the driver can recognize surrounding circumstances during activities other than driving.

However, when the environment information is provided through an indoor ambient light, the visibility may be degraded in the daytime. When the environment information is transferred through speaker sound, the intuition may be degraded because the recognition of space perception such as directivity is insufficient.

### SUMMARY

Various embodiments are directed to an indoor display apparatus of a vehicle, which includes a flip-dot display installed at the top of a cockpit module inside a vehicle and configured to output external environment information during autonomous driving such that the external environment information can be intuitionally transferred to a driver, and a control method thereof.

In an embodiment, an indoor display apparatus of a vehicle may include: a vehicle state input unit configured to receive a vehicle state; a front detection unit configured to detect a forward object ahead of a vehicle; a flip-dot display installed at the top of a cockpit module, and configured to implement a pixel by rotating a flip disk; an illumination module installed around the flip-dot display, and configured to illuminate the surface of the flip-dot display; and a control unit configured to receive an operation mode of the vehicle from the vehicle state input unit, receive a distance to the forward object and a direction of the forward object from the front detection unit, and operate the flip-dot display and the illumination module.

The flip-dot display may further include a clear cover configured to prevent foreign matters.

The flip disk of the flip-dot display may have a front surface and a rear surface, which have different colors.

The flip disk of the flip-dot display may have a front surface and a rear surface, which have different reflection characteristics.

When the operation mode of the vehicle is an autonomous driving mode, the control unit may operate the illumination module in a color according to the autonomous driving mode, and operate the flip-dot display to reflect light of the illumination module.

When the forward object is detected and the detected distance at which the forward object is detected falls within a preset distance, the control unit may operate the flip-dot display according to the detection direction and motion of the forward object.

When the detected distance at which the forward object is detected falls within a warning distance, the control unit may operate the flip-dot display while operating the illumination module in a warning color.

The indoor display apparatus may further include an illuminance sensor configured to detect ambient brightness of the vehicle. When the forward object is detected and the detected distance at which the forward object is detected falls within the preset distance, the control unit may operate the illumination module according to the ambient brightness, and then operate the flip-dot display to reflect the light of the illumination module according to the detected direction and motion of the forward object.

The control unit may receive the vehicle state, and operate the flip-dot display to output welcome animation when the vehicle states indicates that the vehicle has been initially started.

In an embodiment, a control method of an indoor display apparatus of a vehicle may include: receiving, by a control unit, a vehicle state and a detection result of a forward object; determining, by the control unit, whether the forward object is detected while the vehicle travels, according to the received vehicle state and the received detection result of the forward object; and operating, by the control unit, a flip-dot display and an illumination module according to the detected distance and direction of the forward object, when the forward object is detected while the vehicle travels.

The flip-dot display may include a flip disk having a front surface and a rear surface, which have different colors.

The flip-dot display may include a flip disk having a front surface and a rear surface, which have different reflection characteristics.

The operating of the flip-dot display and the illumination module may include operating, by the control unit, the flip-dot display according to the detected direction and motion of the forward object, when the detected distance at which the forward object is detected falls within a preset distance.

The operating of the flip-dot display and the illumination module may include operating, by the control unit, the flip-dot display while operating the illumination module in a warning color, when the detected distance at which the forward object is detected falls within a warning distance.

The operating of the flip-dot display and the illumination module may include receiving, by the control unit, ambient brightness from an illuminance sensor, operating the illumination module according to the ambient brightness when the detected distance at which the forward object is detected falls within a preset distance, and then operating the flip-dot display to reflect the light of the illumination module according to the detected direction and motion of the forward object.

The control method may further include operating, by the control unit, the illumination module in a color according to the autonomous driving mode, and operating the flip-dot display to reflect light of the illumination module, when the received result of the vehicle state indicates that the operation mode of the vehicle is an autonomous driving mode.

The control method may further include operating, by the control unit, the flip-dot display to output welcome animation, when the received result of the vehicle state indicates that the vehicle has been initially started.

In accordance with the embodiments of the present invention, the indoor display apparatus of the vehicle and the control method thereof may include the flip-dot display installed at the top of the cockpit module inside the vehicle, and output external environment information during autonomous driving, thereby providing the surrounding effect through the operation noise of the flip-dot display and the visual information. Therefore, the indoor display apparatus of the vehicle and the control method thereof can not only intuitionally transfer the external information to the driver, but also improve the visibility in the daytime by the flip-dot display, thereby improving the visual information transfer effect.

### BRIEF DESCRIPTION OF THE DRAWINGS

FIG. 1 is a block configuration diagram illustrating an indoor display apparatus of a vehicle in accordance with an embodiment of the present invention.
FIG. 2 is a diagram illustrating that the indoor display apparatus of the vehicle in accordance with the embodiment of the present invention is mounted.
FIG. 3 is a side cross-sectional view illustrating that the indoor display apparatus of the vehicle in accordance with the embodiment of the present invention is mounted.
FIG. 4 is a diagram for describing a detection region of a front detection unit in the indoor display apparatus of the vehicle in accordance with the embodiment of the present invention.
FIGS. 5A to 5C are diagrams illustrating an operation state of the indoor display apparatus of the vehicle in accordance with the embodiment of the present invention.
FIG. 6 is a flowchart for describing a control method of an indoor display apparatus of a vehicle in accordance with an embodiment of the present invention.

### DETAILED DESCRIPTION OF THE ILLUSTRATED EMBODIMENTS

Hereinafter, an indoor display apparatus of a vehicle and a control method thereof will be described below with reference to the accompanying drawings through various exemplary embodiments. It should be noted that the drawings are not to precise scale and may be exaggerated in thickness of lines or sizes of components for descriptive convenience and clarity only. Furthermore, the terms as used herein are defined by taking functions of the invention into account and can be changed according to the custom or intention of users or operators. Therefore, definition of the terms should be made according to the overall disclosures set forth herein.

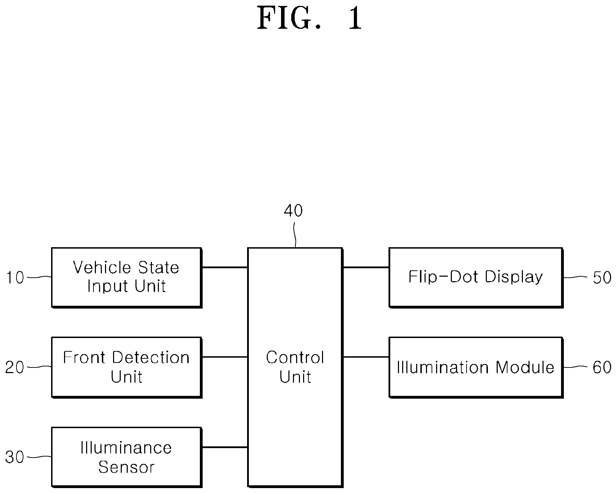

FIG. 1 is a block configuration diagram illustrating an indoor display apparatus of a vehicle in accordance with an embodiment of the present invention,

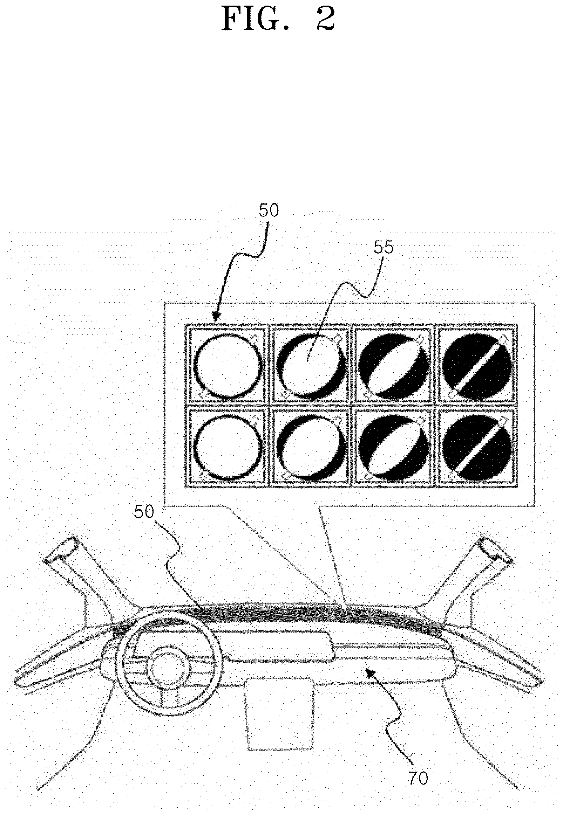

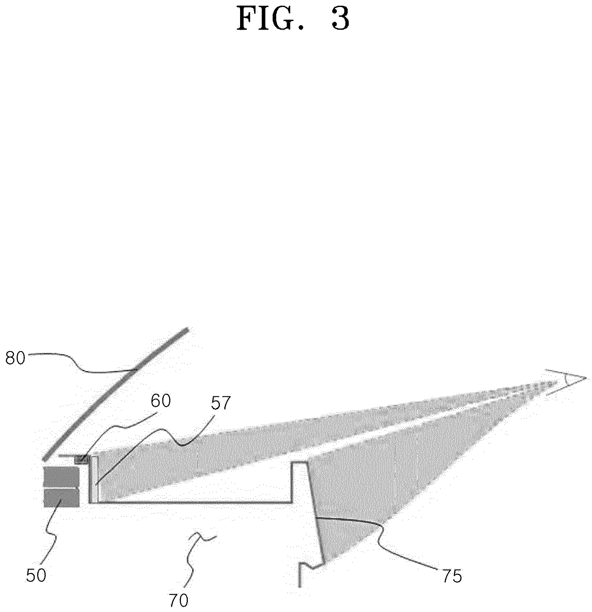

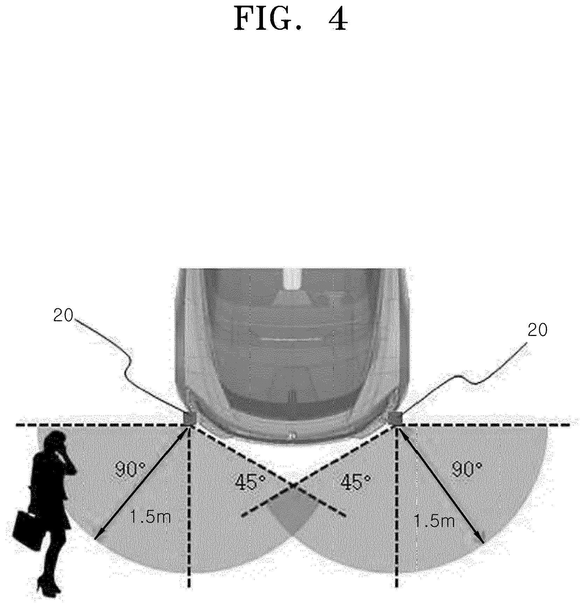

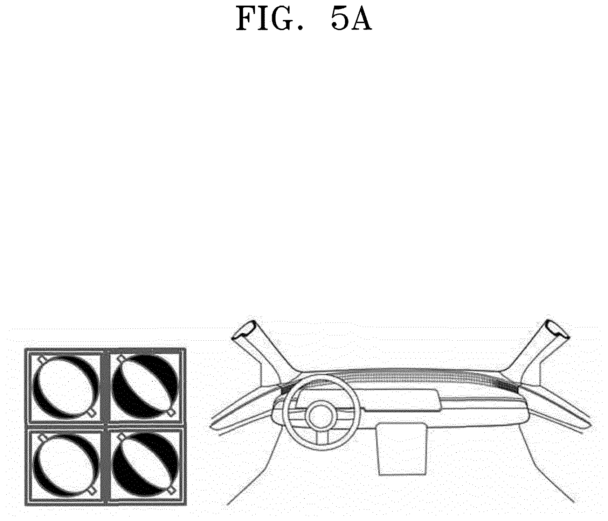

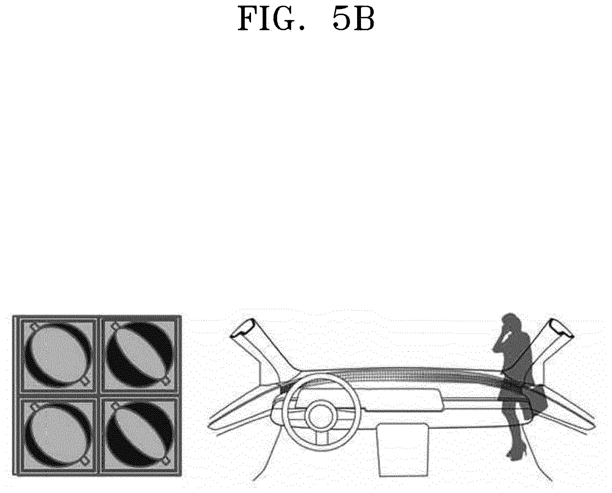

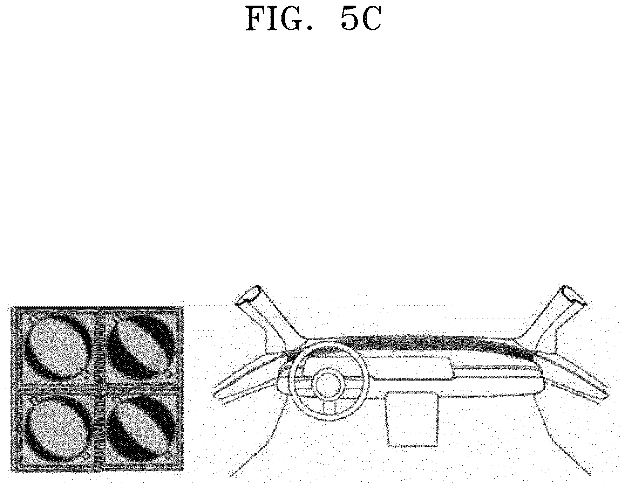

FIG. 2 is a diagram illustrating that the indoor display apparatus of the vehicle in accordance with the embodiment of the present invention is mounted, FIG. 3 is a side cross-sectional view illustrating that the indoor display apparatus of the vehicle in accordance with the embodiment of the present invention is mounted, FIG. 4 is a diagram for describing a detection region of a front detection unit in the indoor display apparatus of the vehicle in accordance with the embodiment of the present invention, and FIG. 5 is a diagram illustrating an operation state of the indoor display apparatus of the vehicle in accordance with the embodiment of the present invention.

As illustrated in FIGS. 1 to 3, the indoor display apparatus of the vehicle in accordance with the embodiment of the present invention may include a vehicle state input unit 10, a front detection unit 20, a flip-dot display 50, an illumination module 60, a control unit 40 and an illuminance sensor 30.

The vehicle state input unit 10 may receive the operation state and traveling state of the vehicle, and provide the received information to the control unit 40, such that the control unit 40 can determine whether the vehicle is traveling in an autonomous driving mode and display the determination result.

As illustrated in FIG. 4, the front detection unit 20 may be installed at the front of the vehicle, detect a forward object ahead of the vehicle, and provide the detected distance and direction to the control unit 40, such that the control unit 40 can operate the flip-dot display 50 according to the detected distance to the forward object and the detected direction of the forward object.

As illustrated in FIG. 2, the flip-dot display 50 may be installed at the top of a cockpit module 70, and implement a pixel through a process of rotating a flip disk 55 whose front and rear surfaces have different colors, by changing the polarity of an electromagnet. With this structure, the volume and weight of the flip-dot display 50 may be reduced more than a structure that rotates flip disks using an actuator, which makes it possible to reduce the manufacturing cost thereof.

The cockpit module 70 is disposed in front of a driver seat and passenger seat in the vehicle, and serves to divide an engine room from the inside of the vehicle. The cockpit module 70 may include a steering wheel and an instrument panel, which are installed at the driver seat for a steering function of the vehicle, a glove box and a passenger seat airbag device, which are installed at the passenger seat, and a display device, an audio device and an air conditioner which are installed at the center fascia.

As illustrated in FIG. 3, the flip-dot display 50 may be installed at the top of the cockpit module 70 inside a windshield 80 such that a main display 75 installed at the front surface of the cockpit module 70 and a viewing angle of a driver are distinguished from each other, and include a clear cover 57 for preventing foreign matters.

The illumination module 60 may be installed around the flip-dot display 50, and illuminate the surface of the flip-dot display 50 so as to obtain an ambient light effect. Furthermore, the illumination module 60 may reflect and display the light of the illumination module 60 while the pixels of the flip-dot display 50 are rotated, thereby improving the visibility in the nighttime.

Here, the front and rear surfaces of the flip disk 55 of the flip-dot display 50 may be set to have different reflecting characteristics (e.g. gloss and matt), which makes it possible to improve the light reflecting effect of the illumination module 60.

The control unit 40 may receive the operation mode of the vehicle from the vehicle state input unit 10, receive the distance to the forward object and the direction of the forward object from the front detection unit 20, and operate the flip-dot display 50 and the illumination module 60.

Furthermore, when the operation mode of the vehicle is an autonomous driving mode, the control unit 40 may operate the illumination module 60 in color according to the autonomous driving mode as illustrated in FIG. 5C, and operate the flip-dot display 50 to reflect the light of the illumination module 60, thereby informing the driver that the vehicle is traveling in the autonomous driving mode.

Furthermore, when the distance at which the forward object is detected falls within a preset distance, the control unit 40 may operate the flip-dot display 50 as illustrated in FIG. 5A, according to the detected direction and movement of the forward object.

For example, when a pedestrian passes the front of the vehicle, the control unit 40 may operate the flip-dot display 50 according to the direction in which the pedestrian passes, such that the driver can intuitionally recognize the approach of the pedestrian through a surrounding effect using operation noise, caused by sound which is generated while the flip disk 55 is rotated, and visual information displayed on the flip-dot display 50.

When the detected distance at which the forward object is detected falls within a warning distance, the control unit 40 may operate the flip-dot display 50 while operating the illumination module 60 in a warning color as illustrated in FIG. 5B.

The illuminance sensor 30 may sense the ambient brightness of the vehicle and provide the ambient brightness to the control unit 40. Thus, when the detected distance at which the forward object is detected falls within the preset distance in the case that the forward object is detected, the control unit 40 may operate the illumination module 60 in the nighttime or a dark place according to the ambient brightness, and then operate the flip-dot display 50 to reflect the light of the illumination module 60 according to the detection direction and motion of the forward object, thereby improving the visibility in the nighttime.

As described above, the indoor display apparatus of the vehicle in accordance with the embodiment of the present invention may include the flip-dot display installed at the top of the cockpit module inside the vehicle, and output external environment information during autonomous driving, thereby obtaining the surrounding effect through the operation noise of the flip-dot display and the visual information. Therefore, the indoor display apparatus can not only intuitionally transfer the external information to the driver, but also improve the visibility in the daytime through the flip-dot display, thereby improving the visual information transfer effect.

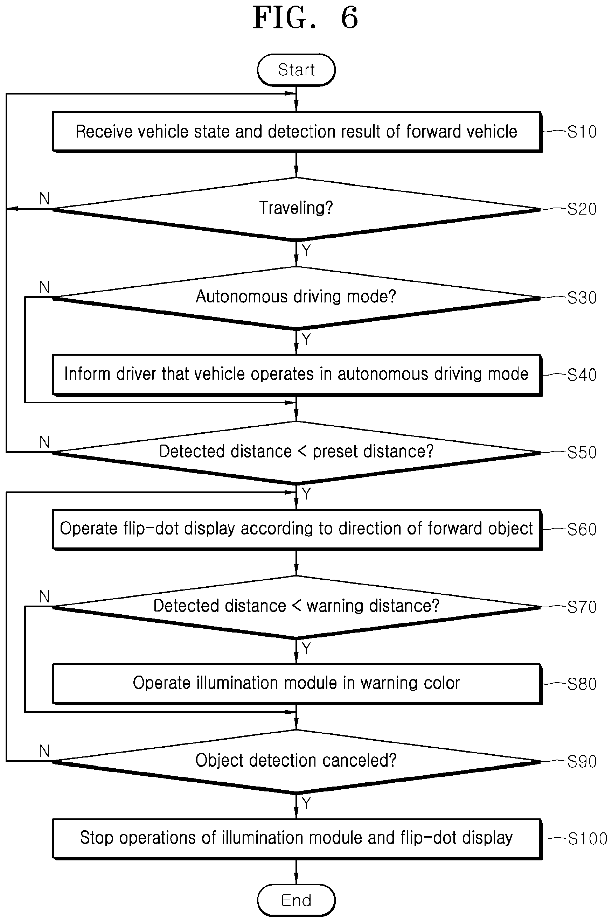

FIG. 6 is a flowchart for describing a control method of an indoor display apparatus of a vehicle in accordance with an embodiment of the present invention.

As illustrated in FIG. 6, the control method of the indoor display apparatus of the vehicle in accordance with the embodiment of the present invention starts with step S10 in which the control unit 40 receives a vehicle state from the vehicle state input unit 10, and receives a detection result of a forward object from the front detection unit 20.

After receiving the vehicle state in step S10, the control unit 40 determines whether the vehicle is traveling, in step S20.

When the vehicle state received in step S10 indicates that the vehicle is initially started, the control unit 40 may operate the flip-dot display 50 to output welcome animation.

When the determination result of step S20 indicates that the vehicle is not traveling, the control unit 40 returns to step S10 to receive the vehicle state and the detection result of the forward object.

On the other hand, when the determination result of step S20 indicates that the vehicle is traveling, the control unit 40 determines whether the operation mode of the vehicle is an autonomous driving mode, based on the vehicle state, in step S30.

When the determination result of step S30 indicates that the operation mode of the vehicle is the autonomous driving mode, the control unit 40 may operate the illumination module 60 in a color according to the autonomous driving mode as illustrated in FIG. 5C, and operate the flip-dot display 50 to reflect the light of the illumination module 60, thereby informing the driver that the vehicle operates in the autonomous driving mode, in step S40.

When the determination result of step S30 indicates that the operation mode of the vehicle is not the autonomous driving mode, or after the control unit 40 informs the driver that the vehicle operates in the autonomous driving mode in step S40, the control unit 40 determines whether the detected distance is less than a preset distance, according to the detection result of the forward object, in step S50.

When the determination result of step S50 indicates that no forward object is detected or the detected distance is not less than the preset distance, the control unit 40 may return to step S10 to continuously receive the vehicle state and the detection result of the forward object.

However, when the detected distance is less than the preset distance, the control unit 40 operates the flip-dot display 50 according to the detected direction and motion of the forward object, in step S60.

As illustrated in FIG. 2, the flip-dot display 50 may be installed at the top of the cockpit module 70, and implement a pixel through a process of rotating the flip disk 55 whose front and rear surfaces have different colors, by changing the polarity of the electromagnet. With this structure, the volume and weight of the flip-dot display 50 may be reduced more than a structure that rotates the flip disks using an actuator, which makes it possible to reduce the manufacturing cost thereof.

Furthermore, the front and rear surfaces of the flip disk 55 of the flip-dot display 50 may be set to have different reflecting characteristics (e.g. gloss and matt), which makes it possible to improve the light reflecting effect of the illumination module 60.

For example, when a pedestrian passes the front of the vehicle, the control unit 40 may operate the flip-dot display 50 according to the direction in which the pedestrian passes, such that the driver can intuitionally recognize the approach of the pedestrian through a surrounding effect using operation noise, caused by sound which is generated while the flip disk 55 is rotated, and visual information displayed on the flip-dot display 50.

While operating the flip-dot display 50 according to the detected direction and motion of the forward object in step S60, the control unit 40 determines whether the detected distance to the forward object is less than a warning distance, in step S70.

When the determination result of step S70 indicates that the detected distance is less than the warning distance, the control unit 40 operates the flip-dot display 50 while operating the illumination module 60 in a warning color as illustrated in FIG. 5B, in step S80.

On the other hand, when the determination result of step S70 indicates that the detected distance is equal to or more than the warning distance or after the control unit 40 operates the illumination module 60 in the warning color in step S80, the control unit 40 determines whether the object detection has been canceled, in step S90.

The control unit determines whether the object detection has been canceled because the detected distance increased or no object was detected according to the detection result, in step S90. When the determination result of step S90 indicates that the object detection is not canceled, the control unit 40 returns to step S60 to continuously operate the flip-dot display 50 according to the direction and motion of the forward object.

On the other hand, when the determination result of step S90 indicates that the object detection has been canceled, the control unit 40 stops the operations of the flip-dot display 50 and the illumination module 60, in step S100.

The control unit 40 may receive the ambient brightness from the illuminance sensor 30. When the detected distance at which the forward object is detected falls within the preset distance, the control unit 40 may operate the illumination module 60 in the nighttime or a dark place according to the ambient brightness, and then operate the flip-dot display 50 to reflect the light of the illumination module 60 according to the detected direction and motion of the forward object, thereby improving the visibility in the nighttime.

As described above, the control method of the indoor display apparatus of the vehicle in accordance with the embodiment of the present invention may include the flip-dot display installed at the top of the cockpit module inside the vehicle, and output external environment information during autonomous driving, thereby providing the surrounding effect through the operation noise of the flip-dot display and the visual information. Therefore, the control method can not only intuitionally transfer the external information to the driver, but also improve the visibility in the daytime by the flip-dot display, thereby improving the visual information transfer effect.

The embodiments described in this specification may be implemented with a method or process, a device, a software program, a data stream or a signal, for example. Although a feature is discussed only in a single context (for example, discussed only in a method), the discussed feature can be implemented in another type (for example, apparatus or program). An apparatus may be implemented in suitable hardware, software or firmware. The method can be implemented in a device such as a processor which generally refers to a processing device including a computer, a microprocessor, an integrated circuit or a programmable logic device. The processor also includes a communication device, such as a computer, cellular phone, PDA (Personal Digital Assistant) and another device, which facilitates information communication between end users.

## Claims

1. An indoor display apparatus of a vehicle, comprising:
a vehicle state input unit (10) configured to receive a vehicle state;
a front detection unit (20) configured to detect a forward object ahead of a vehicle;
a flip-dot display (50) installed at the top of a cockpit module (70), and configured to implement a pixel by rotating a flip disk (55);
an illumination module (60) installed around the flip-dot display (50), and configured to illuminate the surface of the flip-dot display (50); and
a control unit (40) configured to receive an operation mode of the vehicle from the vehicle state input unit (10), receive a distance to the forward object and a direction of the forward object from the front detection unit (20), and operate the flip-dot display (50) and the illumination module (60).

2. The indoor display apparatus of claim 1, wherein the flip-dot display (50) further comprises a clear cover (57) configured to prevent foreign matters or wherein the flip disk (55) of the flip-dot display (50) has a front surface and a rear surface, which have different colors.

3. The indoor display apparatus of claim 1, wherein the flip disk (55) of the flip-dot display (50) has a front surface and a rear surface, which have different reflection characteristics.

4. The indoor display apparatus of claim 1, wherein when the operation mode of the vehicle is an autonomous driving mode, the control unit (40) operates the illumination module (60) in a color according to the autonomous driving mode, and operates the flip-dot display (50) to reflect light of the illumination module (60).

5. The indoor display apparatus of claim 1, wherein when the forward object is detected and the detected distance at which the forward object is detected falls within a preset distance, the control unit (40) operates the flip-dot display (50) according to the detection direction and motion of the forward object.

6. The indoor display apparatus of claim 1, wherein when the detected distance at which the forward object is detected falls within a warning distance, the control unit (40) operates the flip-dot display (50) while operating the illumination module in a warning color.

7. The indoor display apparatus of claim 1, further comprising an illuminance sensor (30) configured to detect ambient brightness of the vehicle,
wherein when the forward object is detected and the detected distance at which the forward object is detected falls within the preset distance, the control unit (40) operates the illumination module according to the ambient brightness, and then operates the flip-dot display (50) to reflect the light of the illumination module (60) according to the detected direction and motion of the forward object.

8. The indoor display apparatus of claim 1, wherein the control unit (40) receives the vehicle state, and operates the flip-dot display (50) to output welcome animation when the vehicle states indicates that the vehicle has been initially started.

9. A control method of an indoor display apparatus of a vehicle, comprising:
receiving, by a control unit (40), a vehicle state and a detection result of a forward object;
determining, by the control unit (40), whether the forward object is detected while the vehicle travels, according to the received vehicle state and the received detection result of the forward object; and
operating, by the control unit (40), a flip-dot display (50) and an illumination module (60) according to the detected distance and direction of the forward object, when the forward object is detected while the vehicle travels.

10. The control method of claim 9, wherein the flip-dot display (50) comprises a flip disk (55) having a front surface and a rear surface, which have different colors or wherein the flip-dot display comprises a flip disk having a front surface and a rear surface, which have different reflection characteristics.

11. The control method of claim 9, wherein the operating of the flip-dot display (50) and the illumination module (60) comprises operating, by the control unit (40), the flip-dot display (50) according to the detected direction and motion of the forward object, when the detected distance at which the forward object is detected falls within a preset distance.

12. The control method of claim 9, wherein the operating of the flip-dot display (50) and the illumination module (60) comprises operating, by the control unit (40), the flip-dot display (50) while operating the illumination module (60) in a warning color, when the detected distance at which the forward object is detected falls within a warning distance.

13. The control method of claim 9, wherein the operating of the flip-dot display (50) and the illumination module (60) comprises receiving, by the control unit (40), ambient brightness from an illuminance sensor (30), operating the illumination module (60) according to the ambient brightness when the detected distance at which the forward object is detected falls within a preset distance, and then operating the flip-dot display (50) to reflect the light of the illumination module (60) according to the detected direction and motion of the forward object.

14. The control method of claim 9, further comprising operating, by the control unit (40), the illumination module (60) in a color according to the autonomous driving mode, and operating the flip-dot display (50) to reflect light of the illumination module (60), when the received result of the vehicle state indicates that the operation mode of the vehicle is an autonomous driving mode.

15. The control method of claim 9, further comprising operating, by the control unit (40), the flip-dot display (50) to output welcome animation, when the received result of the vehicle state indicates that the vehicle has been initially started.

## Patentansprüche

1. Innenanzeigevorrichtung eines Fahrzeugs, die aufweist:
eine Fahrzeugzustand-Eingabeeinheit (10), die dazu ausgebildet ist, einen Fahrzeugzustand zu erhalten;
eine vordere Detektionseinheit (20), die dazu ausgebildet ist, ein vor einem Fahrzeug liegendes Objekt zu detektieren;
eine Flip-Dot-Anzeige (50), die am oberen Teil eines Cockpit-Moduls (70) installiert und dazu ausgebildet ist, ein Pixel durch Drehen einer Flip-Disk (55) zu implementieren;
ein Beleuchtungsmodul (60), das um die Flip-Dot-Anzeige (50) herum installiert und dazu ausgebildet ist, die Oberfläche der Flip-Dot-Anzeige (50) zu beleuchten; und
eine Steuereinheit (40), die dazu ausgebildet ist, einen Betriebsmodus des Fahrzeugs von der Fahrzeugzustand-Eingabeeinheit (10) zu erhalten, einen Abstand zu dem vorausliegenden Objekt und eine Richtung des vorausliegenden Objekts von der vorderen Detektionseinheit (20) zu erhalten, und die Flip-Dot-Anzeige (50) und das Beleuchtungsmodul (60) zu betätigen.

2. Innenanzeigevorrichtung nach Anspruch 1, wobei die Flip-Dot-Anzeige (50) ferner einen Klarsichtabdeckung (57) aufweist, der dazu ausgebildet ist, Fremdkörper zu verhindern, und wobei die Flip-Disk (55) der Flip-Dot-Anzeige (50) eine Vorderfläche und eine Rückfläche aufweist, die unterschiedliche Farben haben.

3. Innenanzeigevorrichtung nach Anspruch 1, wobei die Flip-Disk (55) der Flip-Dot-Anzeige (50) eine Vorderfläche und eine Rückfläche aufweist, die unterschiedliche Reflexionseigenschaften haben.

4. Innenanzeigevorrichtung nach Anspruch 1, wobei, wenn der Betriebsmodus des Fahrzeugs ein autonomer Fahrmodus ist, die Steuereinheit (40) das Beleuchtungsmodul (60) in einer Farbe entsprechend dem autonomen Fahrmodus betätigt und die Flip-Dot-Anzeige (50) so betätigt, dass das Licht des Beleuchtungsmoduls (60) reflektiert wird.

5. Innenanzeigevorrichtung nach Anspruch 1, wobei, wenn das vorausliegende Objekt detektiert wird und der detektierte Abstand, in dem das vorausliegende Objekt detektiert wird, in einen vorbestimmten Abstand fällt, die Steuereinheit (40) die Flip-Dot-Anzeige (50) entsprechend der Detektionsrichtung und -bewegung des vorausliegenden Objekts betätigt.

6. Innenanzeigevorrichtung nach Anspruch 1, wobei, wenn der detektierte Abstand, in dem das vorausliegende Objekt detektiert wird, in einen Warnabstand fällt, die Steuereinheit (40) die Flip-Dot-Anzeige (50) betätigt, während das Beleuchtungsmodul in einer Warnfarbe betätigt wird.

7. Innenanzeigevorrichtung nach Anspruch 1, die ferner einen Beleuchtungsstärkesensor (30) aufweist, der dazu ausgebildet ist, eine Umgebungshelligkeit des Fahrzeugs zu detektieren,
wobei, wenn das vorausliegende Objekt detektiert wird und der detektierte Abstand, in dem das vorausliegende Objekt detektiert wird, in den vorbestimmten Abstand fällt, die Steuereinheit (40) das Beleuchtungsmodul entsprechend der Umgebungshelligkeit betätigt und dann die Flip-Dot-Anzeige (50) so betätigt, dass das Licht des Beleuchtungsmoduls (60) entsprechend der detektierten Richtung und Bewegung des vorausliegenden Objekts reflektiert wird.

8. Innenanzeigevorrichtung nach Anspruch 1, wobei die Steuereinheit (40) den Fahrzeugzustand erhält und die Flip-Dot-Anzeige (50) betätigt, um eine Willkommensanimation auszugeben, wenn die Fahrzeugzustände angeben, dass das Fahrzeug zunächst gestartet wurde.

9. Steuerverfahren einer Innenanzeigevorrichtung eines Fahrzeugs, das umfasst:
Erhalten, mittels einer Steuereinheit (40), eines Fahrzeugzustands und eines Detektionsergebnisses eines vorausliegenden Objekts;
Bestimmen, mittels der Steuereinheit (40), ob das vorausliegende Objekt detektiert wird, während das Fahrzeug fährt, entsprechend dem erhaltenen Fahrzeugzustand und dem erhaltenen Detektionsergebnis des vorausliegenden Objekts; und
Betätigen, mittels der Steuereinheit (40), einer Flip-Dot-Anzeige (50) und eines Beleuchtungsmoduls (60) entsprechend dem detektierten Abstand und der detektierten Richtung des vorausliegenden Objekts, wenn das vorausliegende Objekt detektiert wird, während das Fahrzeug fährt.

10. Steuerverfahren nach Anspruch 9, wobei die Flip-Dot-Anzeige (50) eine Flip-Disk (55) mit einer Vorderfläche und einer Rückfläche aufweist, die unterschiedliche Farben haben, oder wobei die Flip-Dot-Anzeige eine Flip-Disk mit einer Vorderfläche und einer Rückfläche aufweist, die unterschiedliche Reflexionseigenschaften haben.

11. Steuerverfahren nach Anspruch 9, wobei das Betätigen der Flip-Dot-Anzeige (50) und des Beleuchtungsmoduls (60) das Betätigen, mittels der Steuereinheit (40), der Flip-Dot-Anzeige (50) entsprechend der detektierten Richtung und Bewegung des vorausliegenden Objekts umfasst, wenn der detektierte Abstand, in dem das vorausliegende Objekt detektiert wird, in einen vorbestimmten Abstand fällt.

12. Steuerverfahren nach Anspruch 9, wobei das Betätigen der Flip-Dot-Anzeige (50) und des Beleuchtungsmoduls (60) das Betätigen, mittels der Steuereinheit (40), der Flip-Dot-Anzeige (50) umfasst, während das Beleuchtungsmodul (60) in einer Warnfarbe betätigt wird, wenn der detektierte Abstand, in dem das vorausliegende Objekt detektiert wird, in einen Warnabstand fällt.

13. Steuerverfahren nach Anspruch 9, wobei das Betätigen der Flip-Dot-Anzeige (50) und des Beleuchtungsmoduls (60) das Erhalten, mittels der Steuereinheit (40), der Umgebungshelligkeit von einem Beleuchtungsstärkensensor (30), das Betätigen des Beleuchtungsmoduls (60) entsprechend der Umgebungshelligkeit, wenn der detektierte Abstand, in dem das vorausliegende Objekt detektiert wird, in einen vorbestimmten Abstand fällt, und dann das Betätigen der Flip-Dot-Anzeige (50) umfasst, um das Licht des Beleuchtungsmoduls (60) entsprechend der detektierten Richtung und Bewegung des vorausliegenden Objekts zu reflektieren.

14. Steuerverfahren nach Anspruch 9, das ferner das Betätigen, mittels der Steuereinheit (40), des Beleuchtungsmoduls (60) in einer Farbe entsprechend dem autonomen Fahrmodus und das Betätigen der Flip-Dot-Anzeige (50) umfasst, um das Licht des Beleuchtungsmoduls (60) zu reflektieren, wenn das erhaltene Ergebnis des Fahrzeugzustands anzeigt, dass der Betriebsmodus des Fahrzeugs ein autonomer Fahrmodus ist.

15. Steuerverfahren nach Anspruch 9, das ferner das Betätigen, mittels der Steuereinheit (40), der Flip-Dot-Anzeige (50) umfasst, um eine Willkommensanimation auszugeben, wenn das erhaltene Ergebnis des Fahrzeugzustands angibt, dass das Fahrzeug zunächst gestartet wurde.

## Revendications

1. Appareil d'affichage intérieur d'un véhicule, comprenant :
une unité d'entrée d'état de véhicule (10) configurée pour recevoir un état de véhicule ;
une unité de détection avant (20) configurée pour détecter un objet en avant devant le véhicule ;
une girouette à pastilles (50) installée au sommet d'un module de poste de pilotage (70), et configurée pour mettre en œuvre un pixel par rotation d'un disque pastille (55) ;
un module d'illumination (60) installé autour de la girouette à pastilles (50), et configuré pour illuminer la surface de la girouette à pastilles (50) ; et
une unité de commande (40) configurée pour recevoir un mode de fonctionnement du véhicule de l'unité d'entrée d'état de véhicule (10), recevoir une distance par rapport à l'objet en avant et une direction de l'objet en avant de l'unité de détection avant (20), et faire fonctionner la girouette à pastilles (50) et le module d'illumination (60).

2. Appareil d'affichage intérieur selon la revendication 1, dans lequel la girouette à pastilles (50) comprend en outre un couvercle transparent (57) configuré pour éviter des corps étrangers ou dans lequel le disque pastille (55) de la girouette à pastilles (50) a une surface avant et une surface arrière, qui ont des couleurs différentes.

3. Appareil d'affichage intérieur selon la revendication 1, dans lequel le disque pastille (55) de la girouette à pastilles (50) a une surface avant et une surface arrière qui ont des caractéristiques de réflexion différentes.

4. Appareil d'affichage intérieur selon la revendication 1, dans lequel, lorsque le mode de fonctionnement du véhicule est un mode de conduite autonome, l'unité de commande (40) fait fonctionner le module d'illumination (60) dans une couleur selon le mode de conduite autonome, et fait fonctionner la girouette à pastilles (50) pour refléter une lumière du module d'illumination (60).

5. Appareil d'affichage intérieur selon la revendication 1, dans lequel, lorsque l'objet en avant est détecté et que la distance détectée à laquelle l'objet en avant est détecté s'inscrit dans une distance prédéfinie, l'unité de commande (40) fait fonctionner la girouette à pastilles (50) selon la direction de détection et le mouvement de l'objet en avant.

6. Appareil d'affichage intérieur selon la revendication 1, dans lequel, lorsque la distance détectée à laquelle l'objet en avant est détecté s'inscrit dans une distance d'avertissement, l'unité de commande (40) fait fonctionner la girouette à pastilles (50) tout en faisant fonctionner le module d'illumination dans une couleur d'avertissement.

7. Appareil d'affichage intérieur selon la revendication 1, comprenant en outre un capteur d'éclairement (30) configuré pour détecter une luminosité ambiante du véhicule,
dans lequel, lorsque l'objet en avant est détecté et que la distance détectée à laquelle l'objet en avant est détecté s'inscrit dans la distance prédéfinie, l'unité de commande (40) fait fonctionner le module d'illumination selon la luminosité ambiante, puis fait fonctionner la girouette à pastilles (50) pour refléter la lumière du module d'illumination (60) selon la direction et le mouvement détectés de l'objet en avant.

8. Appareil d'affichage intérieur selon la revendication 1, dans lequel l'unité de commande (40) reçoit l'état de véhicule, et fait fonctionner la girouette à pastilles (50) pour produire une animation de bienvenue lorsque les états de véhicule indiquent que le véhicule a été initialement démarré.

9. Procédé de commande d'un appareil d'affichage intérieur d'un véhicule, comprenant :
la réception, par une unité de commande (40), d'un état de véhicule et d'un résultat de détection d'un objet en avant ;
la détermination, par l'unité de commande (40), si l'objet en avant est détecté ou non pendant que le véhicule se déplace, selon l'état de véhicule reçu et le résultat de détection reçu de l'objet en avant ; et
le fonctionnement, par l'unité de commande (40), d'une girouette à pastilles (50) et d'un module d'illumination (60) selon la distance et la direction détectées de l'objet en avant, lorsque l'objet en avant est détecté pendant que le véhicule se déplace.

10. Procédé de commande selon la revendication 9, dans lequel la girouette à pastilles (50) comprend un disque pastille (55) ayant une surface avant et une surface arrière, qui ont des couleurs différentes ou dans lequel la girouette à pastilles comprend un disque pastille ayant une surface avant et une surface arrière, qui ont des caractéristiques de réflexion différentes.

11. Procédé de commande selon la revendication 9, dans lequel le fonctionnement de la girouette à pastilles (50) et du module d'illumination (60) comprend le fonctionnement, par l'unité de commande (40), de la girouette à pastilles (50) selon la direction et le mouvement détectés de l'objet en avant, lorsque la distance détectée à laquelle l'objet en avant est détecté s'inscrit dans une distance prédéfinie.

12. Procédé de commande selon la revendication 9, dans lequel le fonctionnement de la girouette à pastilles (50) et du module d'illumination (60) comprend le fonctionnement, par l'unité de commande (40), de la girouette à pastilles (50) tout en faisant fonctionner le module d'illumination (60) dans une couleur d'avertissement, lorsque la distance détectée à laquelle l'objet en avant est détecté s'inscrit dans une distance d'avertissement.

13. Procédé de commande selon la revendication 9, dans lequel le fonctionnement de la girouette à pastilles (50) et du module d'illumination (60) comprend la réception, par l'unité de commande (40), d'une luminosité ambiante en provenance d'un capteur d'éclairement (30), le fonctionnement du module d'illumination (60) selon la luminosité ambiante lorsque la distance détectée à laquelle l'objet en avant est détecté s'inscrit dans une distance prédéfinie, puis le fonctionnement de la girouette à pastilles (50) pour refléter la lumière du module d'illumination (60) selon la direction et le mouvement détectés de l'objet en avant.

14. Procédé de commande selon la revendication 9, comprenant en outre le fonctionnement, par l'unité de commande (40), du module d'illumination (60) dans une couleur selon le mode de conduite autonome, et le fonctionnement de la girouette à pastilles (50) pour refléter une lumière du module d'illumination (60), lorsque le résultat reçu de l'état de véhicule indique que le mode de fonctionnement du véhicule est un mode de conduite autonome.

15. Procédé de commande selon la revendication 9, comprenant en outre le fonctionnement, par l'unité de commande (40), de la girouette à pastilles (50) pour produire une animation de bienvenue, lorsque le résultat reçu de l'état de véhicule indique que le véhicule a été initialement démarré.
